# FASCICULE DE BREVET EUROPEEN

(11) **EP 2 509 806 B1**
(45) Date de publication et mention de la délivrance du brevet: **19.08.2015**
(21) Numéro de dépôt: 10787461.2
(22) Date de dépôt: 07.12.2010
(51) Int. Cl.: B60C 15/06

(54) **BOURRELET DE PNEUMATIQUE POUR VEHICULE LOURD DE TYPE GENIE CIVIL**
REIFENWULST FÜR EIN SCHWERES BAUFAHRZEUG
TIRE BEAD FOR A HEAVY CIVIL ENGINEERING VEHICLE

(30) Priorité: 09.12.2009 FR 0958780
(43) Date de publication de la demande: 17.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONDU, Lucien, F-63800 La Roche Noire (FR)
(74) Mandataire: Le Cam, Stéphane Georges Elie
(86) Numéro de dépôt international: PCT/EP2010/069076
(87) Numéro de publication internationale: WO 2011/070017

(56) Documents cités:
- FR-A1- 2 928 104
- JP-A- 9 175 122
- JP-A- 2006 015 951
- US-A- 5 196 077

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25".

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement métalliques enrobés d'un matériau polymérique d'enrobage. Les éléments de renforcement métalliques sont sensiblement parallèles entre eux et font, avec la direction circonférentielle, un angle compris entre 85° et 95°. La couche d'armature de carcasse comprend une partie principale, reliant les deux bourrelets entre eux et s'enroulant, dans chaque bourrelet, autour d'un noyau tringle., Le noyau tringle comprend un élément de renforcement circonférentiel le plus souvent métallique entouré d'au moins un matériau, de manière non exhaustive, polymérique ou textile. L'enroulement de la couche d'armature de carcasse autour du noyau tringle va de l'intérieur vers l'extérieur du pneumatique pour former un retournement d'armature de carcasse comprenant une extrémité. Le retournement d'armature de carcasse, dans chaque bourrelet, permet l'ancrage de la couche d'armature de carcasse au noyau tringle du bourrelet.

L'extrémité du retournement d'armature de carcasse est recouverte, sur ses deux faces respectivement axialement intérieure et axialement extérieure, par un élément de bordage, constitué d'un matériau polymérique de bordage le plus souvent de même composition chimique que le matériau polymérique d'enrobage mais pouvant être différent. L'élément de bordage constitue ainsi une surépaisseur de matériau polymérique d'enrobage à l'extrémité du retournement d'armature de carcasse.

Chaque bourrelet comprend également un élément de remplissage prolongeant radialement vers l'extérieur le noyau tringle. L'élément de remplissage a, dans tout plan méridien, une section sensiblement triangulaire et est constitué d'au moins un matériau polymérique de remplissage. L'élément de remplissage peut être constitué d'un empilage dans le sens radial d'au moins deux matériaux polymériques de remplissage en contact suivant une surface de contact coupant tout plan méridien selon une trace méridienne. L'élément de remplissage sépare axialement la partie principale d'armature de carcasse et le retournement d'armature de carcasse.

Un matériau polymérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un matériau polymérique, exprimé en méga pascals (MPa), la contrainte de traction mesurée pour un allongement de 10% de l'éprouvette.

Un matériau polymérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent des variations de courbure combinées avec des variations de tension des éléments de renforcement métalliques de la partie principale d'armature de carcasse et du retournement d'armature de carcasse.

Les cycles de flexion entraînent en particulier des contraintes et déformations dans les matériaux polymériques d'enrobage, de bordage et de remplissage, situés au voisinage immédiat de l'extrémité du retournement d'armature de carcasse, susceptibles d'entraîner, dans la durée, une dégradation du pneumatique nécessitant son remplacement.

Plus précisément, les contraintes et déformations, au voisinage immédiat de l'extrémité du retournement d'armature de carcasse, entraînent la propagation des fissures, initiées en extrémité du retournement d'armature de carcasse, plus particulièrement dans le cas d'éléments de renforcement métalliques.

Selon les inventeurs, l'initiation des fissures résulte principalement d'un défaut d'adhésion des extrémités des éléments de renforcement métalliques du retournement d'armature de carcasse avec les matériaux polymériques d'enrobage, de bordage ou de remplissage, en contact avec lesdites extrémités. L'augmentation de température des bourrelets, lors des cycles de flexion, accentue le défaut d'adhésion préexistant sur le pneumatique neuf.

Les fissures se propagent à travers les matériaux polymériques d'enrobage, de bordage et de remplissage et entraînent la dégradation du bourrelet, et donc la déchéance du pneumatique. La vitesse de propagation des fissures dépend d'une part de l'amplitude et de la fréquence des cycles de contraintes et de déformations, d'autre part des rigidités respectives des matériaux polymériques d'enrobage, de bordage et de remplissage, dans la zone de fissuration.

Lé document US 3 921 693 a déjà décrit, dans le cas d'un pneumatique à armature de carcasse radiale dont les éléments de renforcement sont métalliques, des bourrelets dont la conception a pour objectif la prévention de fissures en extrémité du retournement d'armature de carcasse. Dans la solution technique proposée, l'extrémité du retournement d'armature de carcasse est recouverte par un matériau polymériques, dont la dureté Shore A est supérieure à celle du ou des matériaux polymériques de remplissage.

Le document JP 2006 015951 A décrit un pneumatique similaire.

Le document US 4 086 948 a également décrit, en vue d'augmenter la durée de vie d'un pneumatique radial pour véhicule lourd, un retournement d'armature de carcasse haut, c'est-à-dire dont l'extrémité est radialement extérieure à la droite passant par les points les plus axialement extérieurs des flancs du pneumatique. De plus, le matériau polymérique d'enrobage des éléments de renforcement métalliques de l'armature de carcasse a une dureté Shore A et un module d'élasticité à 300% d'allongement supérieurs respectivement à la dureté Shore A et au module d'élasticité à 300% d'allongement du matériau polymérique de remplissage.

Enfin, le document US 5 056 575 décrit un bourrelet de pneumatique pour véhicule lourd, tel que des camions et des bus, permettant de réduire les déformations et de ralentir la propagation de fissures dans le matériau polymérique au voisinage de l'extrémité du retournement d'armature de carcasse, en vue d'augmenter l'endurance du bourrelet. La solution technique proposée consiste en un bourrelet ayant trois matériaux polymériques de remplissage, dont les modules d'élasticité à 100% d'allongement décroissent lorsqu'on passe du matériau polymérique de remplissage adjacent au retournement d'armature de carcasse et le plus radialement extérieur, au matériau polymérique de remplissage adjacent au noyau tringle et le plus radialement intérieur.

Les inventeurs se sont donnés pour objectif d'améliorer l'endurance des bourrelets d'un pneumatique radial pour véhicule lourd de type génie civil, en diminuant la vitesse de propagation des fissures qui sont initiées en extrémité de retournement d'armature de carcasse et se propagent à travers les matériaux polymériques d'enrobage, de bordage et de remplissage.

Cet objectif a été atteint, selon l'invention, par :
- un pneumatique pour véhicule lourd de type génie civil comprenant deux bourrelets destinés à entrer en contact avec une jante, une armature de carcasse comprenant au moins une couche d'armature de carcasse constituée d'éléments de renforcement métalliques enrobés par un matériau polymérique d'enrobage,
- la couche d'armature de carcasse comprenant une partie principale s'enroulant dans chaque bourrelet, de l'intérieur vers l'extérieur du pneumatique, autour d'un noyau tringle pour former un retournement d'armature de carcasse comprenant une extrémité recouverte par un élément de bordage constitué d'un matériau polymérique de bordage,
- chaque bourrelet comprenant un élément de remplissage prolongeant radialement vers l'extérieur le noyau tringle,
- l'élément de remplissage ayant, dans tout plan méridien, une section sensiblement triangulaire et étant constitué d'au moins un matériau polymérique de remplissage,
- le matériau polymérique de remplissage en contact avec l'élément de bordage ayant un module d'élasticité à 10% d'allongement inférieur au module d'élasticité à 10% d'allongement du matériau polymérique de bordage,
- un élément de transition, constitué d'un matériau polymérique de transition, étant au moins en partie en contact, sur sa face axialement extérieure, avec le matériau polymérique de bordage et, sur sa face axialement intérieure, avec un matériau polymérique de remplissage,
- les extrémités radialement extérieure et radialement intérieure de l'élément de transition étant respectivement radialement extérieure et radialement intérieure à l'extrémité du retournement d'armature de carcasse
- le module d'élasticité à 10% d'allongement du matériau polymérique de transition est intermédiaire entre les modules d'élasticité à 10% d'allongement respectifs du matériau polymérique de bordage et du matériau polymérique de remplissage avec lequel l'élément de transition est en contact.

Selon l'invention, il est avantageux d'avoir un élément de transition, constitué d'un matériau polymérique de transition, au moins en partie en contact, sur sa face axialement extérieure, avec le matériau polymérique de bordage et, sur sa face axialement intérieure, avec un matériau polymérique de remplissage. En effet, l'adjonction d'un élément de transition entre l'élément de bordage et le matériau de remplissage axialement intérieur à l'extrémité du retournement d'armature de carcasse permet de limiter localement, dans les matériaux polymériques situés au voisinage de l'extrémité du retournement d'armature de carcasse, les niveaux de contraintes et de déformations dont dépend la vitesse de propagation des fissures initiées en extrémité du retournement d'armature de carcasse.

Il est également avantageux d'avoir les extrémités radialement extérieure et radialement intérieure de l'élément de transition respectivement radialement extérieure et radialement intérieure à l'extrémité du retournement d'armature de carcasse. Un positionnement radial de l'extrémité du retournement d'armature de carcasse entre les deux extrémités respectivement radialement extérieure et intérieure de l'élément de transition permet de garantir le contact entre l'extrémité du retournement d'armature de carcasse et l'élément de transition, compte tenu des tolérances de positionnement radial de l'extrémité du retournement d'armature de carcasse inhérentes au procédé de fabrication.

Enfin, le module d'élasticité à 10% d'allongement du matériau polymérique de transition est avantageusement intermédiaire entre les modules d'élasticité à 10% d'allongement respectifs du matériau polymérique de bordage et du matériau polymérique de remplissage avec lequel l'élément de transition est en contact. La décroissance progressive des modules d'élasticité à 10% d'allongement quand on passe du matériau polymérique de bordage au matériau polymérique de transition, puis au matériau polymérique de remplissage permet un gradient décroissant et progressif de rigidités, qui permet de diminuer les contraintes et déformations en extrémité du retournement d'armature de carcasse et, par conséquent, de ralentir la propagation des fissures.

Un module d'élasticité à 10% d'allongement du matériau polymérique de transition apporte un avantage d'autant plus significatif que l'écart entre les modules d'élasticité à 10% d'allongement respectifs du matériau polymérique de bordage et du matériau polymérique de remplissage est important. Dans l'exemple de pneumatique selon l'invention étudié, le module d'élasticité à 10% d'allongement du matériau polymérique de bordage est égal à 1.6 fois le module d'élasticité à 10% d'allongement du matériau polymérique de remplissage.

Selon un mode de réalisation de l'invention, l'épaisseur de l'élément de transition est au moins égale à 0.25 fois la distance entre l'extrémité du retournement d'armature de carcasse et la partie principale d'armature de carcasse. On appelle épaisseur de l'élément de transition, l'épaisseur constante de l'élément de transition mesurée en dehors des zones d'effilement aux extrémités de l'élément de transition. La distance entre l'extrémité du retournement d'armature de carcasse et la partie principale d'armature de carcasse est la distance mesurée, selon la droite passant par l'extrémité du retournement d'armature de carcasse et perpendiculaire à la partie principale de l'armature de carcasse, entre la génératrice axialement intérieure des éléments de renforcement du retournement d'armature de carcasse et la génératrice axialement extérieure des éléments de renforcement de la partie principale d'armature de carcasse. Cette épaisseur minimale de l'élément de transition permet d'établir un gradient de rigidités minimum, permettant de diminuer la vitesse de propagation des fissures.

L'épaisseur de l'élément de transition est avantageusement au plus égale à 0.60 fois la distance entre l'extrémité du retournement d'armature de carcasse et la partie principale d'armature de carcasse. En effet, la dissipation thermique du matériau polymérique de transition est supérieure à celle du matériau polymérique de remplissage, du fait de son module d'élasticité à 10% d'allongement plus élevé. Par conséquent, un volume de matériau polymérique de transition trop élevé entraîne une élévation de température du bourrelet dommageable à sa durée de vie, d'où l'importance de limiter l'épaisseur de l'élément de transition à une valeur maximale.

Il est avantageux que la distance entre l'extrémité radialement extérieure de l'élément de transition et l'extrémité du retournement d'armature de carcasse soit au moins égale à 2 fois la distance entre l'extrémité du retournement d'armature de carcasse et la partie principale d'armature de carcasse. Cette distance est mesurée entre la droite, passant par l'extrémité radialement extérieure de l'élément de transition et parallèle à la droite passant par l'extrémité du retournement d'armature de carcasse et perpendiculaire à la partie principale de l'armature de carcasse, et la droite passant par l'extrémité du retournement d'armature de carcasse et perpendiculaire à la partie principale de l'armature de carcasse. Cette distance minimale garantit la présence de l'élément de transition axialement extérieure à l'extrémité du retournement d'armature de carcasse, dont la position radiale est susceptible de variations compte tenu des tolérances de fabrication.

Il est également avantageux que la distance entre l'extrémité radialement extérieure de l'élément de transition et l'extrémité du retournement d'armature de carcasse soit au plus égale à 4 fois la distance entre l'extrémité du retournement d'armature de carcasse et la partie principale d'armature de carcasse. La portion d'élément de transition, au-delà de cette distance maximale, d'une part accentue la dissipation thermique dans le bourrelet, dommageable au bourrelet, sans être utile pour compenser l'incertitude de positionnement radial de l'extrémité du retournement d'armature de carcasse, d'où un surcoût de matériau polymérique de transition inutile.

Un autre mode de réalisation avantageux de l'invention est d'avoir la distance entre l'extrémité radialement intérieure de l'élément de transition et l'extrémité du retournement d'armature de carcasse au moins égale à 2 fois la distance entre l'extrémité du retournement d'armature de carcasse et la partie principale d'armature de carcasse. Cette distance est mesurée entre la droite, passant par l'extrémité radialement intérieure de l'élément de transition et parallèle à la droite passant par l'extrémité du retournement d'armature de carcasse et perpendiculaire à la partie principale de l'armature de carcasse, et la droite passant par l'extrémité du retournement d'armature de carcasse et perpendiculaire à la partie principale de l'armature de carcasse. Cette distance minimale permet de garantir une surface de contact minimale entre le retournement d'armature de carcasse et l'élément de transition et de garantir le recouvrement de l'extrémité du retournement d'armature de carcasse, compte tenu des tolérances de positionnement radial de l'extrémité du retournement d'armature de carcasse inhérentes au procédé de fabrication.

Il est encore avantageux d'avoir la distance entre l'extrémité radialement intérieure de l'élément de transition et l'extrémité du retournement d'armature de carcasse au plus égale à 6 fois la distance entre l'extrémité du retournement d'armature de carcasse et la partie principale d'armature de carcasse. En effet, la portion d'élément de transition, au-delà de cette distance maximale, d'une part accentue la dissipation thermique dans le bourrelet, dommageable au bourrelet, d'autre part est inutile à la fois pour assurer l'adhésion entre le retournement d'armature de carcasse et l'élément de transition, et pour compenser l'incertitude de positionnement radial de l'extrémité du retournement d'armature de carcasse, d'où un surcoût de matériau polymérique de transition inutile.

Un mode de réalisation avantageux de l'invention est d'avoir le module d'élasticité à 10% d'allongement du matériau polymérique de transition au moins égal à 0.9 fois et au plus égal 1.1 fois la moyenne arithmétique des modules d'élasticité à 10% d'allongement respectifs du matériau polymérique de bordage et du matériau polymérique de remplissage. Cet intervalle de valeurs pour le module d'élasticité à 10% d'allongement du matériau polymérique de transition garantit un gradient de rigidités entre les mélanges respectifs de bordage, de transition et de remplissage permettant une diminution significative de la vitesse de propagation des fissures, par rapport au bourrelet du pneumatique de référence sans élément de transition, quand les fissures se propagent du matériau polymérique de bordage vers le matériau polymérique de transition, puis vers le matériau polymérique de remplissage.

Les caractéristiques de l'invention seront mieux comprises à l'aide de la description des figures annexées 1 et 2 :
- la figure 1 présente une vue en coupe dans un plan méridien du bourrelet d'un pneumatique pour véhicule lourd de type génie civil de l'état de la technique.
- la figure 2 présente une vue en coupe dans un plan méridien du bourrelet d'un pneumatique pour véhicule lourd de type génie civil, selon l'invention.

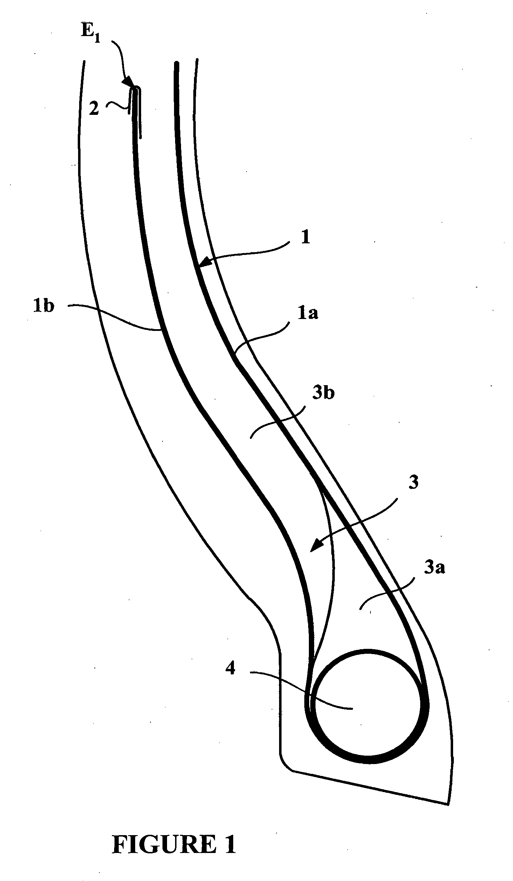

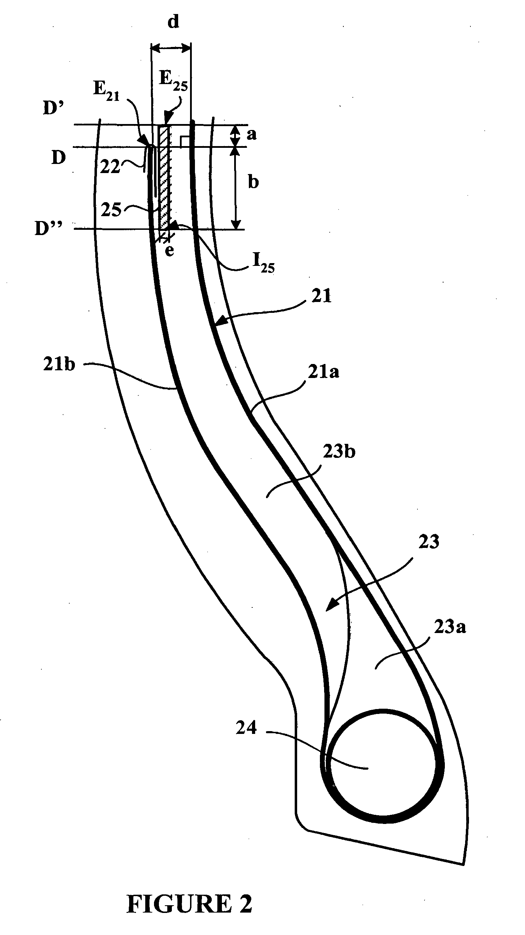

Les figures 1 et 2 ne sont pas représentées à l'échelle pour en faciliter la compréhension.

Sur la figure 1, est représenté un bourrelet de pneumatique pour véhicule lourd de type génie civil de l'état de la technique, comprenant:
- une armature de carcasse, comprenant une seule couche d'armature de carcasse 1 constituée d'éléments de renforcement métalliques enrobés par un matériau polymérique d'enrobage, avec une partie principale d'armature de carcasse la s'enroulant, de l'intérieur vers l'extérieur du pneumatique, autour d'un noyau tringle 4 pour former un retournement d'armature de carcasse 1b,
- un élément de bordage 2 recouvrant l'extrémité E₁ du retournement d'armature de carcasse 1b, sur ses deux faces respectivement axialement intérieure et axialement extérieure, et constitué par un matériau polymérique de bordage de même composition chimique que le matériau polymérique d'enrobage,
- un élément de remplissage 3 prolongeant radialement vers l'extérieur le noyau tringle 4, ayant, dans tout plan méridien, une section sensiblement triangulaire et étant formé de deux matériaux polymériques de remplissage, un premier matériau polymérique de remplissage 3a étant radialement extérieur et en contact avec le noyau tringle 4, et un deuxième matériau polymérique de remplissage 3b étant radialement extérieur et en contact avec le premier matériau polymérique de remplissage 3a.

La figure 2 présente un bourrelet de pneumatique pour véhicule lourd de type génie civil, selon l'invention, comprenant :
- une armature de carcasse, comprenant une seule couche d'armature de carcasse 21 constituée d'éléments de renforcement métalliques enrobés par un matériau polymérique d'enrobage, avec une partie principale d'armature de carcasse 21a s'enroulant, de l'intérieur vers l'extérieur du pneumatique, autour d'un noyau tringle 24 pour former un retournement d'armature de carcasse 21b,
- un élément de bordage 22 recouvrant l'extrémité E₂₁ du retournement d'armature de carcasse 21b, sur ses deux faces respectivement axialement intérieure et axialement extérieure, et constitué par un matériau polymérique de bordage de même composition chimique que le matériau polymérique d'enrobage,
- un élément de remplissage 23 prolongeant radialement vers l'extérieur le noyau tringle 24, ayant, dans tout plan méridien, une section sensiblement triangulaire et étant formé de deux matériaux polymériques de remplissage, un premier matériau polymérique de remplissage 23a étant radialement extérieur et en contact avec le noyau tringle 24, et un deuxième matériau polymérique de remplissage 23b étant radialement extérieur et en contact avec le premier matériau polymérique de remplissage 23a.
- un élément de transition 25, constitué d'un matériau polymérique de transition, au moins en partie en contact, sur sa face axialement extérieure, avec le matériau polymérique de bordage 22 et, sur sa face axialement intérieure, avec un matériau polymérique de remplissage 23b.

L'élément de transition 25 a une épaisseur e, représentée schématiquement constante, mais qui, en réalité, présente le plus souvent des effilements aux extrémités E₂₅ et I₂₅. La longueur de l'élément de transition 25 est a + b. L'extrémité E₂₁ du retournement d'armature de carcasse 21b est radialement positionnée entre les extrémités respectivement radialement extérieure E₂₅ et radialement intérieure I₂₅ de l'élément de transition 25.

L'extrémité radialement extérieure E₂₅ de l'élément de transition 25 est située à une distance a de l'extrémité E₂₁ du retournement d'armature de carcasse 21b. La distance a est la distance entre la droite D', passant par l'extrémité radialement extérieure E₂₅ de l'élément de transition 25 et parallèle à la droite D passant par l'extrémité E₂₁ du retournement d'armature de carcasse 21b et perpendiculaire à la partie principale de l'armature de carcasse 21a, et la droite D passant par l'extrémité E₂₁ du retournement d'armature de carcasse 21b et perpendiculaire à la partie principale de l'armature de carcasse 21a.

L'extrémité radialement intérieure I₂₅ de l'élément de transition 25 est située à une distance b de l'extrémité E₂₁ du retournement d'armature de carcasse 21b. La distance b est la distance entre la droite D", passant par l'extrémité radialement intérieure I₂₅ de l'élément de transition 25 et parallèle à la droite D passant par l'extrémité E₂₁ du retournement d'armature de carcasse 21b et perpendiculaire à la partie principale de l'armature de carcasse 21a, et la droite D passant par l'extrémité E₂₁ du retournement d'armature de carcasse 21b et perpendiculaire à la partie principale de l'armature de carcasse 21a.

La distance d entre l'extrémité E₂₁ du retournement d'armature de carcasse 21b et la partie principale d'armature de carcasse 21a est la distance mesurée, selon la droite D passant par l'extrémité E₂₁ du retournement d'armature de carcasse 21b et perpendiculaire à la partie principale de l'armature de carcasse 21a, entre la génératrice axialement intérieure des éléments de renforcement du retournement d'armature de carcasse 21b et la génératrice axialement extérieure des éléments de renforcement de la partie principale d'armature de carcasse 21a.

L'invention a été plus particulièrement étudiée dans le cas d'un pneumatique pour véhicule lourd de type dumper de dimension 59/80R63. Selon la « European Tyre and Rim Organisation », les conditions nominales d'utilisation d'un tel pneumatique sont une pression de gonflage égale à 6 bars, une charge statique égale à 99 tonnes et une distance parcourue en une heure comprise entre 16 et 32 km. De plus, la hauteur théorique de section H, au sens de la norme ETRTO, d'un tel pneumatique est égale à 1214 mm.

Le pneumatique 59/80R63 a été conçu conformément à l'invention, telle que schématisée sur la figure 2, c'est-à-dire dans le cas d'un retournement haut d'armature de carcasse, dont le positionnement radial de l'extrémité est au voisinage de la droite axiale passant par les points les plus axialement extérieurs du pneumatique.

La distance d entre l'extrémité E₂₁ du retournement d'armature de carcasse 21b et la partie principale d'armature de carcasse 21a est égale à 15 mm. L'élément de transition 25, limité par ses extrémités respectivement radialement extérieure E₂₅ et radialement intérieure I₂₅, a une épaisseur e égale 4.5 mm, c'est-à-dire à 0.30 fois la distance d. L'extrémité radialement extérieure E₂₅ de l'élément de transition 25 est positionnée à la distance a égale à 45 mm, c'est-à-dire à 3 fois la distance d. L'extrémité radialement intérieure I₂₅ de l'élément de transition 25 est positionnée à la distance b égale à 75 mm, c'est-à-dire à 5 fois la distance d.

Les modules d'élasticité à 10% d'allongement des matériaux polymériques de bordage 22, de transition 25 et de remplissage 23b sont respectivement égaux à 6 MPa, 4.8 MPa et 3.5 MPa. Par conséquent, le module d'élasticité à 10% d'allongement du matériau polymérique de transition 25 est égal à la moyenne arithmétique des modules d'élasticité à 10% d'allongement respectifs des matériaux polymériques de bordage 22 et de remplissage 23b.

Des simulations de calculs par éléments finis ont été réalisées respectivement sur un pneumatique de référence, tel que représenté sur la figure 1, et un pneumatique selon l'invention, tel que représenté sur la figure 2. Pour le pneumatique de référence, l'allongement du matériau polymérique de remplissage 3b, dans la zone d'extrémité E₁ du retournement d'armature de carcasse 1b, sur la face axialement intérieure du retournement d'armature de carcasse 1b, est égal à 1.4 fois l'allongement du matériau polymérique de bordage 2 en contact, ces allongements étant parallèles au retournement d'armature de carcasse 21b. Par conséquent, lorsqu'une fissure se propage du matériau polymérique de bordage 2 vers le matériau polymérique de remplissage 3b, sa vitesse de propagation dans le matériau polymérique de remplissage 3b augmente du fait d'un plus grand allongement du matériau polymérique de remplissage 3b par rapport au matériau polymérique de bordage 2. Pour le pneumatique selon l'invention, l'allongement du matériau polymérique de transition 25, dans la zone d'extrémité E₂₁ du retournement d'armature de carcasse 21b, sur la face axialement intérieure du retournement d'armature de carcasse, est égal à 0.9 fois l'allongement du matériau polymérique de bordage 22. Par conséquent, lorsqu'une fissure se propage du matériau polymérique de bordage 22 vers le matériau polymérique de transition 25, sa vitesse de propagation dans le matériau polymérique de transition 25 diminue du fait d'un plus faible allongement du matériau polymérique de transition 25 par rapport au matériau polymérique de bordage 22.

L'invention ne doit pas être interprétée comme étant limitée à l'exemple illustré sur la figure 2 mais peut être étendue à d'autres variantes de réalisation, telles que, de manière non exhaustive :
- un matériau polymérique de bordage de composition chimique différente de celle du matériau polymérique d'enrobage,
- une absence d'élément de bordage entraînant un contact direct entre la face axialement extérieure de l'élément de transition et le matériau polymérique d'enrobage de la face axialement intérieure du retournement d'armature de carcasse,
- un élément de transition comprenant plusieurs couches de matériaux polymériques de transition deux à deux en contact et de direction radiale,
- un retournement d'armature de carcasse, dont l'extrémité est radialement positionnée plus proche du noyau tringle que dans le cas de la figure 2.

## Revendications

1. Pneumatique pour véhicule lourd de type génie civil comprenant deux bourrelets destinés à entrer en contact avec une jante, une armature de carcasse comprenant au moins une couche d'armature de carcasse (1, 21) constituée d'éléments de renforcement métalliques enrobés par un matériau polymérique d'enrobage, la couche d'armature de carcasse comprenant une partie principale (1a, 21a) s'enroulant dans chaque bourrelet, de l'intérieur vers l'extérieur du pneumatique, autour d'un noyau tringle (4, 24) pour former un retournement d'armature de carcasse (1b, 21b) comprenant une extrémité (E₁, E₂₁) recouverte par un élément de bordage (2, 22) constitué d'un matériau polymérique de bordage, chaque bourrelet comprenant un élément de remplissage (3, 23) prolongeant radialement vers l'extérieur le noyau tringle, l'élément de remplissage ayant, dans tout plan méridien, une section sensiblement triangulaire et étant constitué d'au moins un matériau polymérique de remplissage (3a, 3b, 23a, 23b), le matériau polymérique de remplissage (3b, 23b) en contact avec l'élément de bordage ayant un module d'élasticité à 10% d'allongement inférieur au module d'élasticité à 10% d'allongement du matériau polymérique de bordage, **caractérisé en ce qu'**un élément de transition (25), constitué d'un matériau polymérique de transition, est au moins en partie en contact, sur sa face axialement extérieure, avec le matériau polymérique de bordage (22) et, sur sa face axialement intérieure, avec un matériau polymérique de remplissage (23b), **en ce que** les extrémités radialement extérieure (E₂₅) et radialement intérieure (I₂₅) de l'élément de transition sont respectivement radialement extérieure et radialement intérieure à l'extrémité du retournement d'armature de carcasse et **en ce que** le module d'élasticité à 10% d'allongement du matériau polymérique de transition est intermédiaire entre les modules d'élasticité à 10% d'allongement respectifs du matériau polymérique de bordage et du matériau polymérique de remplissage avec lequel l'élément de transition est en contact.

2. Pneumatique pour véhicule lourd de type génie civil selon la revendication 1, **caractérisé en ce que** l'épaisseur (e) de l'élément de transition (25) est au moins égale à 0.25 fois la distance (d) entre l'extrémité (E₂₁) du retournement d'armature de carcasse (21b) et la partie principale d'armature de carcasse (21a).

3. Pneumatique pour véhicule lourd de type génie civil selon l'une quelconque des revendications 1 ou 2, **caractérisé en ce que** l'épaisseur (e) de l'élément de transition (25) est au plus égale à 0.60 fois la distance (d) entre l'extrémité (E₂₁) du retournement d'armature de carcasse (21b) et la partie principale d'armature de carcasse (21a).

4. Pneumatique pour véhicule lourd de type génie civil selon l'une quelconque des revendications 1 à 3, **caractérisé en ce que** la distance (a) entre l'extrémité radialement extérieure (E₂₅) de l'élément de transition (25) et l'extrémité (E₂₁) du retournement d'armature de carcasse (21b) est au moins égale à 2 fois la distance (d) entre l'extrémité du retournement d'armature de carcasse et la partie principale d'armature de carcasse (21a).

5. Pneumatique pour véhicule lourd de type génie civil selon l'une quelconque des revendications 1 à 4, **caractérisé en ce que** la distance (a) entre l'extrémité radialement extérieure (E₂₅) de l'élément de transition (25) et l'extrémité (E₂₁) du retournement d'armature de carcasse (21b) est au plus égale à 4 fois la distance (d) entre l'extrémité du retournement d'armature de carcasse et la partie principale d'armature de carcasse (21a).

6. Pneumatique pour véhicule lourd de type génie civil selon l'une quelconque des revendications 1 à 5, **caractérisé en ce que** la distance (b) entre l'extrémité radialement intérieure (I₂₅) de l'élément de transition (25) et l'extrémité (E₂₁) du retournement d'armature de carcasse (21b) est au moins égale à 2 fois la distance (d) entre l'extrémité du retournement d'armature de carcasse et la partie principale d'armature de carcasse (21a).

7. Pneumatique pour véhicule lourd de type génie civil selon l'une quelconque des revendications 1 à 6, **caractérisé en ce que** la distance (b) entre l'extrémité radialement intérieure (I₂₅) de l'élément de transition (25) et l'extrémité (E₂₁) du retournement d'armature de carcasse (21b) est au plus égale à 6 fois la distance (d) entre l'extrémité du retournement d'armature de carcasse et la partie principale d'armature de carcasse (21a).

8. Pneumatique pour véhicule lourd de type génie civil selon l'une quelconque des revendications 1 à 7, **caractérisé en ce que** le module d'élasticité à 10% d'allongement du matériau polymérique de transition est au moins égal à 0.9 fois et au plus égal à 1.1 fois la moyenne arithmétique des modules d'élasticité à 10% d'allongement respectifs du matériau polymérique de bordage et du matériau polymérique de remplissage.

## Patentansprüche

1. Luftreifen für ein schweres Baufahrzeug, der zwei Wülste enthält, die dazu bestimmt sind, mit einer Felge in Kontakt zu kommen, wobei eine Karkassenbewehrung mindestens eine Karkassenbewehrungsschicht (1, 21) enthält, die aus mit einem Umhüllungs-Polymermaterial umhüllten metallischen Verstärkungselementen besteht, wobei die Karkassenbewehrungsschicht einen Hauptteil (1a, 21a) enthält, der sich in jedem Wulst von der Innen- zur Außenseite des Luftreifens um einen Wulstkern (4, 24) wickelt, um einen Karkassenbewehrungsumschlag (1b, 21b) zu bilden, welcher ein Ende (E₁, E₂₁) von einem Einfasselement (2, 22) bedeckt enthält, das aus einem Einfass-Polymermaterial besteht, wobei jeder Wulst ein Füllelement (3, 23) enthält, das den Wulstkern radial nach außen verlängert, wobei das Füllelement in jeder Meridianebene einen im Wesentlichen dreieckigen Querschnitt hat und aus mindestens einem Füll-Polymermaterial (3a, 3b, 23a, 23b) besteht, wobei das Füll-Polymermaterial (3b, 23b) in Kontakt mit dem Einfasselement einen Elastizitätsmodul bei 10% Längung geringer als der Elastizitätsmodul bei 10% Längung des Einfass-Polymermaterials hat, **dadurch gekennzeichnet, dass** ein aus einem Übergangs-Polymermaterial bestehendes Übergangselement (25) zumindest zum Teil auf seiner axial äußeren Seite mit dem Einfass-Polymermaterial (22) und auf seiner axial inneren Seite mit einem Füll-Polymermaterial (23b) in Kontakt ist, dass die radial äußeren (E₂₅) und radial inneren Enden (I₂₅) des Übergangselements sich radial außen bzw. radial innen bezüglich des Endes des Karkassenbewehrungsumschlags befinden, und dass der Elastizitätsmodul bei 10% Längung des Übergangs-Polymermaterials zwischen den jeweiligen Elastizitätsmodulen bei 10% Längung des Einfass-Polymermaterials und des Füll-Polymermaterials liegt, mit dem das Übergangselement in Kontakt ist.

2. Luftreifen für ein schweres Baufahrzeug nach Anspruch 1, **dadurch gekennzeichnet, dass** die Dicke (e) des Übergangselements (25) mindestens gleich dem 0,25-Fachen des Abstands (d) zwischen dem Ende (E₂₁) des Karkassenbewehrungsumschlags (21b) und dem Karkassenbewehrungshauptteil (21a) ist.

3. Luftreifen für ein schweres Baufahrzeug nach einem der Ansprüche 1 oder 2, **dadurch gekennzeichnet, dass** die Dicke (e) des Übergangselements (25) höchstens gleich dem 0,60-Fachen des Abstands (d) zwischen dem Ende (E₂₁) des Karkassenbewehrungsumschlags (21b) und dem Karkassenbewehrungshauptteil (21a) ist.

4. Luftreifen für ein schweres Baufahrzeug nach einem der Ansprüche 1 bis 3, **dadurch gekennzeichnet, dass** der Abstand (a) zwischen dem radial äußeren Ende (E₂₅) des Übergangselements (25) und dem Ende (E₂₁) des Karkassenbewehrungsumschlags (21b) mindestens gleich dem doppelten Abstand (d) zwischen dem Ende des Karkassenbewehrungsumschlags und dem Karkassenbewehrungshauptteil (21a) ist.

5. Luftreifen für ein schweres Baufahrzeug nach einem der Ansprüche 1 bis 4, **dadurch gekennzeichnet, dass** der Abstand (a) zwischen dem radial äußeren Ende (E₂₅) des Übergangselements (25) und dem Ende (E₂₁) des Karkassenbewehrungsumschlags (21b) höchstens gleich dem 4-Fachen des Abstands (d) zwischen dem Ende des Karkassenbewehrungsumschlags und dem Karkassenbewehrungshauptteil (21a) ist.

6. Luftreifen für ein schweres Baufahrzeug nach einem der Ansprüche 1 bis 5, **dadurch gekennzeichnet, dass** der Abstand (b) zwischen dem radial inneren Ende (I₂₅) des Übergangselements (25) und dem Ende (E₂₁) des Karkassenbewehrungsumschlags (21b) mindestens gleich dem 2-Fachen des Abstands (d) zwischen dem Ende des Karkassenbewehrungsumschlags und dem Karkassenbewehrungshauptteil (21a) ist.

7. Luftreifen für ein schweres Baufahrzeug nach einem der Ansprüche 1 bis 6, **dadurch gekennzeichnet, dass** der Abstand (b) zwischen dem radial inneren Ende (I₂₅) des Übergangselements (25) und dem Ende (E₂₁) des Karkassenbewehrungsumschlags (21b) höchstens gleich dem 6-Fachen des Abstands (d) zwischen dem Ende des Karkassenbewehrungsumschlags und dem Karkassenbewehrungshauptteil (21a) ist.

8. Luftreifen für ein schweres Baufahrzeug nach einem der Ansprüche 1 bis 7, **dadurch gekennzeichnet, dass** der Elastizitätsmodul bei 10% Längung des Übergangs-Polymermaterials mindestens gleich dem 0,9-Fachen und höchstens gleich dem 1,1-Fachen des arithmetischen Mittels der jeweiligen Elastizitätsmodule bei 10% Längung des Einfass-Polymermaterials und des Füll-Polymermaterials ist.

## Claims

1. Tyre for a heavy vehicle of the civil engineering type, comprising two beads intended to come into contact with a rim, a carcass reinforcement comprising at least one carcass reinforcement layer (1, 21) made up of metal reinforcing elements coated in a coating polymer material, the carcass reinforcement layer comprising a main portion (1a, 21a) which, in each bead, is wound from the inside towards the outside of the tyre, around a bead wire core (4, 24) to form a turned-back portion of carcass reinforcement (1b, 21b) comprising an end (E₁, E₂₁) covered by an edge-binding element (2, 22) made of an edge-binding polymer material, each bead comprising a filler element (3, 23) extending the bead wire core radially outwards, the filler element having, in any meridian plane, a substantially triangular cross section and being made of at least one filler polymer material (3a, 3b, 23a, 23b), the filler polymer material (3b, 23b) in contact with the edge-binding element having an elastic modulus at 10% elongation that is less than the elastic modulus at 10% elongation of the edge-binding polymer material, **characterized in that** a transition element (25), made of a transition polymer material, is at least partially in contact, on its axially external face, with the edge-binding polymer material (22) and, on its axially internal face, with a filler polymer material (23b), **in that** the radially external (E₂₅) and radially internal (I₂₅) ends of the transition element are respectively radially on the outside of and radially on the inside of the end of the turned-back portion of carcass reinforcement, and **in that** the elastic modulus at 10% elongation of the transition polymer material is somewhere between the respective elastic moduli at 10% elongation of the edge-binding polymer material and of the filler polymer material with which the transition element is in contact.

2. Tyre for a heavy vehicle of the civil engineering type according to Claim 1, **characterized in that** the thickness (e) of the transition element (25) is at least equal to 0.25 times the distance (d) between the end (E₂₁) of the turned-back portion of carcass reinforcement (21b) and the main portion of carcass reinforcement (21a) .

3. Tyre for a heavy vehicle of the civil engineering type according to either one of Claims 1 and 2, **characterized in that** the thickness (e) of the transition element (25) is at most equal to 0.60 times the distance (d) between the end (E₂₁) of the turned-back portion of carcass reinforcement (21b) and the main portion of carcass reinforcement (21a).

4. Tyre for a heavy vehicle of the civil engineering type according to any one of Claims 1 to 3, **characterized in that** the distance (a) between the radially external end (E₂₅) of the transition element (25) and the end (E₂₁) of the turned-back portion of carcass reinforcement (21b) is at least equal to 2 times the distance (d) between the end of the turned-back portion of carcass reinforcement and the main portion of carcass reinforcement (21a).

5. Tyre for a heavy vehicle of the civil engineering type according to any one of Claims 1 to 4, **characterized in that** the distance (a) between the radially external end (E₂₅) of the transition element (25) and the end (E₂₁) of the turned-back portion of carcass reinforcement (21b) is at most equal to 4 times the distance (d) between the end of the turned-back portion of carcass reinforcement and the main portion of carcass reinforcement (21a).

6. Tyre for a heavy vehicle of the civil engineering type according to any one of Claims 1 to 5, **characterized in that** the distance (b) between the radially internal end (I₂₅) of the transition element (25) and the end (E₂₁) of the turned-back portion of carcass reinforcement (21b) is at least equal to 2 times the distance (d) between the end of the turned-back portion of carcass reinforcement and the main portion of carcass reinforcement (21a).

7. Tyre for a heavy vehicle of the civil engineering type according to any one of Claims 1 to 6, **characterized in that** the distance (b) between the radially internal end (I₂₅) of the transition element (25) and the end (E₂₁) of the turned-back portion of carcass reinforcement (21b) is at most equal to 6 times the distance (d) between the end of the turned-back portion of carcass reinforcement and the main portion of carcass reinforcement (21a).

8. Tyre for a heavy vehicle of the civil engineering type according to any one of Claims 1 to 7, **characterized in that** the elastic modulus at 10% elongation of the transition polymer material is at least equal to 0.9 times and at most equal to 1.1 times the arithmetic mean of the respective elastic moduli at 10% elongation of the edge-binding polymer material and of the filler polymer material.
